# EUROPEAN PATENT APPLICATION

(11) **EP 4 687 186 A1**
(43) Date of publication of application: **04.02.2026**
(21) Application number: 24192618.7
(22) Date of filing: 02.08.2024
(51) Int. Cl.: H01M 8/18, C07F 13/00, C07F 15/02

(54) **REDOX FLOW BATTERY WITH CLATHROCHELATE COMPLEX-BASED ELECTROLYTE**

(71) Applicant: Litricity GmbH, 82166 Gräfelfing (DE)
(72) Inventor: de Carvalho, João, 80336 München (DE); Chen, Ting-Yi, 37075 Göttingen (DE)
(74) Representative: Sonnenhauser, Thomas Martin

(57) **Abstract**

The present invention refers to a novel redox flow battery, the battery comprising an electrolyte solution contained in a first storage tank, a first half-cell in fluid communication with the first storage tank, a membrane separating the first half-cell and a second half-cell, wherein the electrolyte solution comprises an iron clathrochelate complex or a manganese clathrochelate complex. These complexes provide the battery with a highly stable electrolyte that can achieve a high energy density while minimizing cost and environmental impact. The present invention further refers to a novel electrolyte solutions comprising clathrochelate complexes, the use of such complexes as shuttle compounds, as well as method of operating a redox flow battery comprising said complexes.

## Description

The present invention relates to novel redox flow batteries comprising electrolyte solutions comprising clathrochelate complexes of iron and/or manganese for use in electrochemical applications.

### Technical background

Energy generation from fossil fuels produces large amount of greenhouse gases and air pollutants, contributing to global warming and air-pollution. In contrast, renewable energy sources such as water, solar, and wind provide significant environmental and socio-economic benefits. However, such renewable sources are intermittent in nature and the power generation is, therefore, highly dependent on weather conditions. Additionally, a sustainable amount of the generated electricity is wasted as production often does not align with the peak demand. Thus, development of novel, efficient large-scale energy storage systems is essential.

Although Li-ion batteries are very efficient for portable applications, they are not suitable for large scale energy storage due to its high cost, flammability, shorter lifespan, and limited availability of lithium metal. In contrast, redox flow batteries (RFBs) constitute a type of electrochemical energy storage system which stockpiles energy in liquid electrolyte solutions. RFBs feature a modular design that enables straightforward scalability and longer lifetimes. In such systems, power and energy densities can be scaled up independently by adjusting the size of the reactor and volume of the electrolyte respectively. Furthermore, aqueous RFBs are non-flammable which makes it advantageous for scale-up compared to Li-batteries. Overall, RFBs may represent a safer alternative for grid support applications. Additionally, they may also be suitable for smaller systems, *e.g.,* in single home application.

Despite of their advantages, RFBs have some drawbacks which need to be addressed for broader market acceptance, *e.g.,* their low energy and power densities. The most matured RFB is the all-vanadium redox flow battery (VRFB) which uses four distinct oxidation states of vanadium (V²⁺, V³⁺, VO²⁺ and VO₂⁺). One major advantage of this cell is that the cross-over of species does not lead to contamination and the cell can be rebalanced electrochemically. In contrast, the sluggish kinetics of the redox reaction limits the current density and therefore the power density. Additionally, vanadium is a rare metal and toxic to the environment. Lastly, the VRFB is ran using highly acidic conditions and demands rigorous safety measures.

An alternative system is the zinc-bromine flow battery which exhibits high voltage - 1.8 V theoretically - and, therefore, relatively high energy density compared to other RFBs. Moreover, this cell is inexpensive and shows good reversibility. However, extremely toxic and corrosive bromine vapours and dendrite formation are restrictive safety issues. On a different approach, the all-iron redox flow batteries represent the most environment friendly RFB because of the non-toxicity and abundancy of iron. Although all-iron RFBs are cost effective, safe and easy to scale up, their low energy and power density remain significant disadvantages. Moreover, free Fe³⁺/Fe²⁺ ions are not ideal redox species and are only stable in very acidic environments due to the favourable formation of oxides. One strategy to improve stability in aqueous milieu is the addition of organic ligands to generate complexes that can be applied at milder conditions. Another advantage of using iron complexes is the enhanced redox reaction kinetics compared to the free ions, leading to higher power density. Polyoxometalates (POMs) constitute an inorganic class of materials which has been investigated in redox flow batteries. Such systems usually depict good water solubility, different redox potentials based on the addenda metal and very fast electron transfer kinetics. However, typical polyoxometalates are based on rare, very expensive metals, such as tungsten, molybdenum and vanadium which limit their commercial appeal. Moreover, metal oxide clusters are usually stable in a defined pH range, hampering the stabilization during cycling. So far, no POM-based RFB has been successfully commercialized.

Previously, electrolyte systems based on (chelate) complexes have been found to exhibit suitable electrochemical properties for use in redox flow batteries. US 9,269,983 B2 discloses an electrolyte system for a flow battery that has an anolyte including [Fe(CN)₆]³⁻ and [Fe(CN)₆]⁴⁻ and a catholyte including Fe²⁺ and Fe³⁺. US 2022/0181666 A1 discloses metal chelates , methods of making the metal chelate, electrolyte formulations comprising metal chelates, and electrochemical devices for energy storage using or including at least one metal chelate are disclosed, further a method to provide a metal to an electrolyte in a flow battery to plate an electrode while the electrode is in the battery. US 2022/

However, there remains a need for stable, cost-effective, and efficient redox flow battery systems which can provide reliable electrochemical energy storage. Recent investigations on transition metal complex-based electrolytes for redox-flow battery application are usually only utilizing one electron transfer event (Fe²⁺/Fe³⁺, Co²⁺/Co³⁺, Mn²⁺/Mn³⁺, Cr²⁺/Cr³⁺...) since the higher valent complexes are in general labile and unstable, as a result, unsuitable for long-duration battery application. The clathrochelate ligand in this invention was proven to be able to stabilize a Fe²⁺, Fe³⁺, and Fe⁴⁺, and Mn³⁺, Mn⁴⁺, and Mn⁵⁺ center, forming corresponding complexes in aqueous solution with indefinite lifetime. Such property makes this kind of metal complexes suitable for redox-active electrolytes which can deliver two electrons while remaining intact, therefore, can be used for building the first symmetric all-fluid transition Fe/Mn-based aqueous redox flow battery.

Clathrochelates and clathrochelate complexes have previously been reported, however, the application in redox flow batteries is not reported in the prior art. The prior art on clathrochelate complexes includes: "Efficient visible light-driven water oxidation catalysed by an iron(IV) clathrochelate complex" by Shylin et al. (Chem. Commun., 2019, 55, 3335), "Acute toxicity of the iron clathrochelate complexes" by Dukhnitsky et al. (Regul. Mech. Biosyst., 2019, 10(3)), "Sheet-like 2D Manganese(IV) Complex with High Photothermal Conversion Efficiency" by Xu et al. (J. Am. Chem. Soc. 2022, 144, 18834-18843), "Indefinitely stable iron(IV) cage complexes formed in water by air oxidation" by Tomyn et al. (Nature Comm. 2017, 8:14099), "Expanding manganese(IV) aqueous chemistry: unusually stable water-soluble hexahydrazide clathrochelate complexes" by Shylin et al. (Chem. Commun., 2021, 57, 11060), and "Electrochemical water oxidation using a stable water-soluble mononuclear manganese clathrochelate" by Zheng et al. (New J. Chem., 2023, 47, 13979).

### Summary of the invention

The inventors have realized the above need and have surprisingly found, in one aspect according to the present disclosure, a redox flow battery, comprising:
an electrolyte solution contained in a first storage tank,
a first half-cell in fluid communication with the first storage tank,
a membrane separating the first half-cell and a second half-cell,
wherein the electrolyte solution comprises an iron clathrochelate complex or a manganese clathrochelate complex.

In a further aspect according to the present disclosure, there is provided an electrolyte solution for use in redox flow batteries, the solution comprising an iron clathrochelate complex or a manganese clathrochelate complex at a concentration of from 0.01 M and 5.0 M preferably from 0.01 M to 2.0 M, further preferably of from 0.01 M to 1.5 M.

In a further aspect according to the present disclosure, there is provided a method of operating a redox flow battery, preferably a redox flow battery as defined in the claims, the method comprising:
charging said redox flow battery by electrically reducing the iron cations fully or partially to Fe²⁺ or Fe³⁺ by electrically reducing the manganese cations fully or partially to Mn³⁺; or charging said redox flow battery by providing said electrolyte solution comprising said iron clathrochelate complex or said manganese clathrochelate complex in a charged state, wherein the iron clathrochelate complex, if present, comprises Fe²⁺ or Fe³⁺ cations or wherein the manganese clathrochelate complex, if present, comprises Mn³⁺ cations

In a further aspect according to the present disclosure, there is provided the use of a redox flow battery as defined in the claims in a method of storing or providing electrical energy in a stationary, portable or mobile device or application.

In a further aspect according to the present disclosure, there is provided the use of an iron clathrochelate complex or a manganese clathrochelate complex, preferably as defined in any of the claims, as shuttle compound in batteries, optionally organic solid flow or redox flow batteries.

### Brief description of the drawings

Figure 1A shows a demonstrative figure of a redox flow battery comprising two half-cells. Figure 1B shows a demonstrative figure of a redox flow battery comprising two half-cells, wherein the second half-cell is an air-electrode.
Figure 2A shows the cyclic voltammogram of Fe^{II}L/Fe^{III}L (L represents the ligand of a clathrochelate complex as defined in the claims) redox pair (8.5 mM) in 1 M NH₄Cl solution at pH 9.2. Figure 2B shows the cyclic voltammogram of Fe^{III}L/Fe^{IV}L redox pair (8.5 mM) in 1 M NH₄Cl solution at pH 9.2.
Figure 3A shows the cyclic voltammogram of Fe^{II}L/Fe^{III}L and Fe^{III}L/Fe^{IV}L redox pairs (8.5 mM) in 1 M NH₄Cl solution at pH 9.2. Figure 3B shows the cyclic voltammogram of Mn^{III}L/Mn^{IV}L redox pair (8.5 mM) in 1 M NH₄Cl solution at pH 3.8.
Figure 4A shows the cyclic voltammogram of Mn^{IV}L/Mn^{V}L redox pair (8.5 mM) in 1 M NH₄Cl solution at pH 3.8. Figure 4B shows the cyclic voltammogram of Mn^{III}L/Mn^{IV}L and Mn^{IV}L/Mn^{V}L redox pairs (8.5 mM) in 1 M NH₄Cl solution at pH 3.8.
Figure 5A shows a demonstrative figure of a symmetric electrolyte system using clathrochelate Fe complexes (FeL). Figure 5B shows a demonstrative figure of using clathrochelate Fe complexes (FeL) as one-side electrolyte.
Figure 6A shows a demonstrative figure of a symmetric system using clathrochelate Mn complexes (MnL). Figure 6B shows a demonstrative figure of using clathrochelate Mn complexes (MnL) as one-side electrolyte.

### Detailed description of the invention

Surprisingly, the inventors have found that the need for an improved electrolyte solutions in redox flow battery systems, wherein, in particular, the stability of charge-carriers (i.e. the redox active species) in the electrolytes is increased and charge carrier properties of multi-charged complexes can be fully utilized, can be addressed by providing redox flow batteries comprising clathrochelate complexes as defined in the claims. In this present invention, clathrochelate-type complexes are presented as electrolytes for aqueous redox-flow batteries as defined in the claims. This type of metal complexes displays cage-like structures which encapsulate the metal and alleviate the possibility of ligand dissociation, thus, increasing the overall chemical stability. Beyond that, the compound is water soluble, and its solubility can be modulated by changing the counter cation. Furthermore, the clathrochelate ligand in this invention was proven to be able to stabilize in aqueous solution several oxidation states of iron (Fe²⁺, Fe³⁺, Fe⁴⁺) and manganese (Mn³⁺, Mn⁴⁺, Mn⁵⁺) center, forming complexes with long lifetimes. Therefore, this complexes are proposed to build the first symmetric all-fluid Fe/Mn-based aqueous RFB, as well as redox flow batteries employing these compounds in combination with air electrodes. Examples 1 to 3 show the preparation of clathrochelate complexes as defined in the claims, as well as physical and electrochemical properties of the electrolyte solutions comprising the clathrochelate complexes of the present invention when provided as charge carriers in electrolyte solutions.

In one aspect according to the present disclosure, there is provided a redox flow battery, comprising:
an electrolyte solution contained in a first storage tank,
a first half-cell in fluid communication with the first storage tank,
a membrane separating the first half-cell and a second half-cell,
wherein the electrolyte solution comprises an iron clathrochelate complex or a manganese clathrochelate complex.

Redox-Flow Batteries (in the following also redox flow batteries, redox batteries; RFB etc.) are generally rechargeable batteries which can be comprised of an anode side and a cathode side and an ion-exchange membrane which separates catholyte and anolytes and two containers for storing electrolytes (catholyte and anolyte/negolyte and posolyte) and two pumps which circulate the electrolyte solutions. In principle, the features which are not defined in the independent claims are, however, not essential to the functioning of a redox flow battery, but the features as defined in the claims can provide a functioning redox flow battery. The energy can be stored by the redox-active chemicals serving as electrolytes (catholyte and anolyte) and the re-chargeability can be attributed to the reversible electrochemical property of electrolytes. Thus, the capacity of the redox-flow battery, which is primarily determined by concentration of the electrolytes and the volume of the tank, is decoupled from the power, which makes it readily scalable.

In this present invention, clathrochelate-type of metal complexes are firstly used as electrolytes for aqueous redox-flow battery application. Unlike typical metal complexes which can suffer from decomposition caused by ligand dissociation, clathrochelate type metal complexes have cage-like structures meaning the metal center is encapsulated by the ligand during the synthesis, which alleviates the possibility of ligand dissociation, thus, increases the stability. Despite common clathrochelate metal complexes are only soluble in organic solvents, the Fe/Mn complexes of this invention are water soluble since the complexes can be present in charged form (e.g. as anions since the ligand can have a charge of -6 and the metal center can have a charge of from +2 to +5) and up to six out-pointing carbonyl groups of the ligand further increase the water-solubility through formation of H-bonds with water molecules in solution.

In general, the term "complex" as used herein refers to a compound that is formed by one or more metal atoms (preferably ions) which is/are coordinated by one or more surrounding (charged or uncharged) ligands. Ligands are molecules or ions that donate pairs of electrons to the central metal, resulting in the formation of coordinate covalent bonds (with the one or more metal atoms and optionally with other ligands). Furthermore, a coordinative bond can comprise a backbonding (such as n-backbonding) between metal and ligand. The ligands can furthermore interact via van der Waals or electrostatic (ionic) forces with a surrounding media. The complex can be uncharged or charged, i.e. in the form of an ion. Generally, the charge of the ligand of the clathrochelate complexes of the present invention is -6 under standard conditions (i.e. 25°C, pH 7, normal pressure). The term "clathrochelate" as used herein refers to a compound having a component (such as a ligand) which encapsulates a second component (such as a metal ion). That is, clathrochelates (or clathrochelate ligands) are ligands that encapsulate metal ions, "clathrochelate complex" (also known as "clathrochelate" in general) thus describes a complex in which a coordinatively saturated metal ion is surrounded by a macropolycyclic ligand.

The term "ion" as used herein refers to a particle (atom, molecule, complex) that carries an electric charge due to the gain or loss of electrons. The term "ions" can include cations which are positively charged ions formed by electron loss, as well as anions, which are negatively charged ions formed by electron gain. Ions can carry a single charge or a plurality or charges. The charge of an ion can vary depending in the chemical, electrochemical and electronic environment. The charge can be localized (centered) at the charged ion or can be delocalized from the ion to further atoms or ions in proximity and/or interaction with the charged ion.

The term "counterion" as used herein similarly refers to a particle (atom, molecule, complex) that carries an electric charge due to the gain or loss of electrons. The term "counterion" can include cations which are positively charged ions formed by electron loss, as well as anions, which are negatively charged ions formed by electron gain. Counterions can carry a single charge or a plurality or charges. The charge of an ion can vary depending in the chemical, electrochemical and electronic environment. The charge can be localized (centered) at the charged counterion or can be delocalized from the ion to further atoms or ions in proximity and/or interaction with the charged counterion. The counterions according to the present disclosure carry a charge (or at least a partial charge) that is opposite to the charge of the ion. That is, if the ion is positively charged, the counterion carries at least a partial negative charge, preferred, the counterions is negatively charged. Preferred cationic counterions are potassium, sodium, lithium, ammonium tetraalkylammonium. Preferred anionic counterions are chloride sulphate, phosphate, tetraborate. The complex can, however, also be present in an uncharged state (i.e. neither cationic nor anionic) due the matching charge of ligand and metal center such as +4 for the metal center and -4 for the ligand. The ion and counterion can dissociate when introduced into aqueous media.

The term "ligand" as used herein generally refers to a molecule or ion or a mixture of molecules or ions that can bind to a central metal atom or ion to form a coordination complex. The concept of ligands is fundamental to coordination chemistry, and it plays a crucial role in various chemical and biological processes. Ligands can vary widely in structure and size, and they can donate one or more pairs of electrons to the metal center to form coordinate covalent bonds. As discussed above, via n backbonding, metal atoms can donate n electrons to the ligand(s). This binding of ligands to metal ions or atoms results in the formation of complex compounds with distinct chemical and physical properties. A "ligand" is thus a molecular entity, which can include molecules or ions, that possesses the ability to bind to a central metal atom or ion through the donation of one or more pairs of electrons. Clathrochelate complexes comprise ligands which encapsulate metal ions as discussed above.

Redox flow batteries according to the present invention can comprise one or two (identical, similar or different) electrolyte solutions, each containing clathrochelate complexes as electroactive species (i.e. charge carrier) dissolved in a solvent as defined in the claims. The electrolyte solution(s) is/are typically referred to as the positive and negative electrolytes (posolyte and negolyte). Common electroactive species according to the prior art include metal ions (e.g., vanadium, iron) or organic molecules (e.g., quinones). The clathrochelate complex according to the present invention allows for increasing the charge density due to the multiple charges that can be carried (as well as swiftly added and removed) by the compounds as defined in the claims. Furthermore, the clathrochelate complex according to the present invention provide highly stable (e.g. under inert or air atmosphere, preferably inert atmosphere, pH from 0.1-14, temperature from -20 to +50 °C), economic and ecologically harmless electrolyte solutions that can thus be applied in a wide variety of applications.

The operation of redox flow batteries relies on the movement of ions between the positive and negative electrolytes. When the battery is charged, electrons are used to reduce the electroactive species in the positive electrolyte while simultaneously oxidizing those in the negative electrolyte. During discharge, the reverse process occurs. The compounds as defined in the claims allow for a swift charging and discharging, while carrying multiple charges and thus increasing the charge density. In some examples, the cells of the redox flow battery provide a current density ranging from 0.01 A/cm² to 10 A/cm² (that is 10 mA/cm² to 10 A/cm²), preferred ranging from 0.1 A/cm² to 5 A/cm², further preferred ranging from 0.5 A/cm² to 2 A/cm², depending on the type and amount/concentration of clathrochelate complex employed in the redox flow battery.

The choice of solvent in the electrolyte solution can be crucial. It should be chemically stable, non-flammable, and have good ionic conductivity. Water is can be used according to the present invention, while organic solvents like acetonitrile or propylene carbonate are used in certain organic flow battery chemistries and can be added to some extend to the aqueous solution (up to 5% by weight).

The choice of electroactive species and their concentration in the electrolyte significantly influences the energy density (total energy storage capacity) and power density (rate of energy delivery) of the battery. Higher concentrations can lead to higher energy density but might affect the battery's efficiency and stability. By providing an electrolyte comprising the clathrochelate complex as defined in the claims, the concentration of the charge carrier can be significantly increased as compared to the prior art while avoiding increasing viscosity.

In this aspect, the redox flow battery comprises an electrolyte solution contained in a first storage tank. The first storage tank can be open or closed due to the stability (with respect to air, pressure, varying temperatures etc.) of the clathrochelate complexes. The first storage tank is not limited with respect to its material and can be made from metal (including alloys), plastic, ceramic, glass, composite material etc. preferably metal such as stainless steel.

The redox flow battery further comprises a first half-cell in fluid communication with the first storage tank. The half-cell of a redox flow battery can comprise an electrode compartment that contains an electrode immersed in an electrolyte solution. The electrode can be made of a conductive material, such as graphite or carbon felt, to facilitate electron transfer during the redox reactions. The electrolyte solution within the half-cell contains active species that participate in the redox reactions, as defined in the claims, which is suitable to be present in various oxidation states. The half-cell can be equipped with an inlet and an outlet for the continuous flow of the electrolyte, ensuring the active species are replenished and the redox reactions can proceed efficiently. The membrane or separator adjoining the half-cell (e.g. between a first and second half-cell) is ion-selective, allowing only specific ions to pass through while preventing cross-contamination of the electrolytes. The half-cell can be designed to operate at a specific voltage range, determined by the redox potential of the electrolyte species used. The internal surface of the half-cell may be coated with catalytic materials to enhance the rate of the redox reactions at the electrode interface. The half-cell can include temperature control mechanisms, such as cooling or heating systems, to maintain optimal operational conditions for the electrolyte and electrode. The structural materials of the half-cell can be selected for their chemical resistance to the electrolyte solution, preventing corrosion and ensuring long-term durability. The first half-cell is not limited with respect to its material and can be made from metal (including alloys), plastic, ceramic, glass, composite material etc. preferably metal such as stainless steel.

The redox flow battery comprises a membrane preferably as defined in the claims. The membrane of a redox flow battery is an ion-selective barrier that can separate two electrolyte solutions in the battery's half-cells (i.e. a first electrolyte solution (in a first half cell) is separated from a second electrolyte solution (in a second half cell)) or one electrolyte solution in a first half cell from a reducing or oxidizing means in second half-cell in general. It is designed to selectively allow specific ions, such as protons or other cations, to pass through while preventing the mixing of different redox-active species from each half-cell. The membrane is typically made of materials like Nafion, a perfluorosulfonic acid polymer, which provides high ionic conductivity and chemical stability; anion exchange membrane materials include quaternary ammonium-based polymers (e.g, quaternized Poly(2,6-dimethyl-1,4-phenylene oxide) (QPPO); quaternized poly(ether ether ketone) (QPEEK); quaternized polysulfone (QPSU); quaternized poly(phenylene) (QPP); quaternized poly(arylene ether sulfone) (QPAES); ionic liquids and polymer blends (e.g. imidazolium-functionalized polymers (e.g. piperidinium-functionalized polymers); polycations and polymer composites (e.g. poly(diallyldimethylammonium chloride) (PDADMAC), poly(ethyleneimine) (PEI)); graft polymers (e.g. graft copolymers with quaternary ammonium groups). Its primary function is to maintain charge balance and enable the continuous flow of ions to sustain the electrochemical reactions in the battery.

The redox flow battery can comprise a first electrode in the first half cell, a second electrode in the second half cell which is spaced apart from the first electrode and a membrane arranged between the first and the second electrode. The term "electrode" as used herein generally refers to a physical object (such as a solid or fluid) capable of taking an electric current to or from a source of power. That is, the term "electrode" as used herein can refer to an electron-providing or electron-removing, i.e. an electron-conducting solid but also to an electron-conducting fluid. The redox flow battery as defined in claim 1 can thus be characterized in that the first electrode and the second electrode both comprise solid structures. The redox battery unit cell as defined in claim 1 can thus alternatively be characterized in that the first electrode comprises a solid structure and wherein the second electrode comprises a fluid, such as a gas (preferred comprising air and/or oxygen) in contact with a second solid (e.g. metal) electrode. That is, if the second electrode comprises for example oxygen (e.g. an air electrode), the oxygen can participate in an electrochemical reaction with protons provided via the membrane and electrons provided via the charge collector to the second solid electrode in a two-electron process producing water. Optionally, the second electrode consists of a fluid, such as a gas, preferred of air and a second solid electrode in contact with the fluid. That is, the electrons provided from the first electrode during discharging can be used in order to provide a reaction of a fluid or a gas (e.g. oxygen with the further addition of protons to water) at the second electrode.

The second electrode can be spaced apart from the first electrode such that short-circuit faults and tunneling current are avoided. That is, the second electrode is not in direct contact with the first electrode but spatially separated from the first electrode. The second electrode can also be in the form of a compound (e.g. fluid, such as a gas) that chemically reacts in order to receive and/or provide electrons, such as oxygen as an air electrode as discussed above. The first and second electrode can be spatially separated for example by a distance (inner electrode distance) of greater than 1 mm. For example, the inner electrode distance can be in the range from 1 mm to 1 cm, or from 2 mm to 100 mm, or from 4 mm to 50 mm. Preferably, the inner electrode distance is from 10 to 25 mm.

The first and second electrode can be separated such that short-circuit faults and tunneling current are avoided. In addition to the spatial separation, the first and second electrode are furthermore separated by a membrane, which is arranged between the first and the second electrode. The membrane acts as (electronical) separator of the first and second electrode. The membrane allows transport of ionic charge carriers that are needed to close the circuit during the charging/discharging of the battery.

The electrolyte solution of the claimed redox battery comprises an iron clathrochelate complex or a manganese clathrochelate complex as defined in the claims. Clathrochelate complexes are coordination compounds in which a metal ion is encapsulated within a (single) polycyclic ligand framework, resembling a cage-like structure. The term "polycyclic ligand" as used herein refers to a ligand as defined in the claims having a total of from 6 to 12 (interconnected) cycles/cyclic moieties, preferably 9 (interconnected) cycles/cyclic moieties. The polycyclic ligand, known as a clathrochelate, can consist of multiple donor atoms that coordinate to the central metal ion, forming a robust three-dimensional structure. These complexes typically exhibit high stability due to the strong chelating effect, which arises from the multiple ligand-metal interactions within the cage. The metal ion is usually completely or partially enclosed by the ligand, which can protect it from external reagents and prevent undesirable side reactions. Clathrochelates can feature a variety of donor atoms, such as nitrogen, oxygen, sulfur, or phosphorus, depending on the ligand's design and the desired properties of the complex. The geometry of clathrochelate complexes is often rigid, leading to well-defined spatial arrangements and highly stable compounds that can be tailored for electrochemical applications, such as for redox flow batteries as charge carriers or shuttle compounds.

The iron or manganese clathrochelate complex can comprise an iron or manganese ion as the center of the clathrochelate complex and six nitrogen atoms of a hexadentate ligand coordinating to the iron or manganese ion. The coordinating nitrogen atoms are preferably connected via two or three atoms, optionally via a substituted or unsubstituted C-C bridge and/or a substituted or unsubstituted N-C-N bridge.

The terms "substituted" and "unsubstituted" as used herein are essential in organic chemistry to describe the structural modifications of organic molecules and to specify the exact chemical structure of a compound. The terms "substituted" and "unsubstituted" are used to describe the presence or absence of additional atoms, groups, or molecules on a chemical compound, typically on a carbon atom in an organic molecule. "Substituted" as used herein refers to a chemical compound when one or more hydrogen atoms attached to the carbon or nitrogen atoms in the molecule have been replaced or substituted by other atoms, groups, or molecules. These other atoms, groups or molecules include but are not limited to, isomers, halogens, chalcogens, amine groups, hydroxy groups, sulfate groups, ether groups, ester groups. The term "unsubstituted" thus defines that in a molecule all the hydrogen atoms (if present) attached to the carbon atoms remain unchanged. In other words, no additional atoms, groups, or molecules have replaced the hydrogen atoms in the molecule. Unsubstituted compounds are typically the simplest form of a particular chemical structure and comprise, preferably consist of hydrogen and carbon atoms.

The substituents can be selected from the group consisting of: halogen, CF₃, =O, - NO₂, -SH, -OH, -CN, -OR", -R", -SR", -COR", -COOR", -NH₂, -NHR", -N(R")-R"-NH-C₁₋₆ Alkyl, -N(C₁₋₆ Alkyl)₂, -NH(C₁₋₆ Alkyl), halogen-substituted C₁₋₆R", C₁₋₆R", wherein R" is a C₁₋₁₀-alkyl, C₆₋₁₂-aryl, C₂₋₁₀ alkenyl, C₂₋₁₀ alkinyl, C₇₋₁₀ alkylenyl, C₇₋₁₀ arylalkyl, C₂₋₁₀ heterocycloalkyl, or a C₂₋₁₀ alkylheterocyclyl.

That is, in the clathrochelate complexes of the present invention, as shown for example in formulae (Ia)-(Id), the ligand of the complexes can be present also as derivatives thereof, preferably wherein the oxygen atoms are substituted by hydroxyl groups, SH groups etc., and/or wherein the nitrogen atoms are substituted by oxygen, sulfur, carbon atoms.

The C-C bridge is between two coordinating nitrogen atoms and is preferably a - C(O)-C(O)- bridge (together with the coordinating nitrogen atoms: N-C(O)-C(O)-N), that is, two connected carbonyl groups which are connected to two coordinating nitrogen atoms. The N-C-N bridge is located between two coordinating nitrogen atoms and is preferably -N-CH₂-N- (together with the coordinating nitrogen atoms: N-N-CH₂-N-N). The -N-C-N- bridges are preferably interconnected in the clathrochelate complex and form a 6-membered cyclic moiety with single bonds, wherein nitrogen atoms and carbon atoms alternate and the nitrogen atoms are (directly) bond to the coordinating nitrogen atoms. Preferably, three -C-C- bridges are present in the clathrochelate complex. Preferably, the -C-C- bridges are (directly) bond to a coordinating nitrogen atom which is (directly) bond also to a 6-membered cyclic moiety as described above.

In some embodiments of the battery, the complex is an iron containing complex and the iron is partially or fully present as Fe²⁺, Fe³⁺ or Fe⁴⁺, preferably the iron is partially or fully present as Fe²⁺ or Fe³⁺. In some embodiments of the battery, the complex is a manganese complex and the manganese is partially or fully present as Mn³⁺ Mn⁴⁺ or Mn⁵⁺, preferably the manganese is partially or fully present as Mn³⁺ or Mn⁴⁺.

That is, the iron (if present, i.e. if the complex is an iron containing complex) is preferably not present in an oxidation state other than Fe²⁺, Fe³⁺ or Fe⁴⁺, preferably the iron is not present in an oxidation state other than Fe²⁺ or Fe³⁺ as described in the following. On the other hand, the manganese (if present, i.e. if the complex is a manganese containing complex) is not present in an oxidation state other than Mn³⁺, Mn⁴⁺ or Mn⁵⁺, preferably the manganese is not present in an oxidation state other than Mn³⁺ or Mn⁴⁺ as described in the following.

The oxidation states that the invention can utilize for iron clathrochelate complexes is not limited, specifically preferred oxidation states the complexes in this invention are Fe²⁺, Fe³⁺, Fe⁴⁺ (when the complex comprises iron). In the application of a symmetric set up (that is, the same clathrochelate complex in the electrolyte solutions of both half-cells), the tank comprising the negolyte (negolyte tank) can be using Fe²⁺/Fe³⁺, and the posolyte is using Fe³⁺/Fe⁴⁺. In the application of one-side electrolyte, either Fe²⁺/Fe³⁺ or Fe³⁺/Fe⁴⁺ can be used individually to deliver one electron and simultaneously to deliver two electrons.

The oxidation states that the invention can utilize for Mn clathrochelate complexes is not limited, specifically preferred oxidation states the complexes in this invention are Mn³⁺, Mn⁴⁺, Mn⁵⁺ (when the complex comprises manganese). In the application of a symmetric set up, the negolyte tank can be using Mn³⁺/Mn⁴⁺, and the posolyte can be using Mn⁴⁺/Mn⁵⁺. In the application of one-side electrolyte, either Mn³⁺/Mn⁴⁺ or Mn⁴⁺/Mn⁵⁺ can be used individually to deliver one electron and simultaneously to deliver two electrons.

That is, for iron clathrochelate symmetric case, charges of the metal ions of the clathrochelate complex include:
Negolyte: Fe²⁺(charged)/Fe³⁺(discharged)
Posolyte: Fe³⁺(discharged)/Fe⁴⁺(charged)

For Fe clathrochelate as one side electrolyte:
Negolyte/Posolyte: Fe²⁺(charged)/Fe³⁺/Fe⁴⁺(discharged)

For Mn clathrochelate symmetric case, charges of the metal ions of the clathrochelate complex include:
Negolyte: Mn³⁺(charged)/Mn⁴⁺(discharged)
Posolyte: Mn⁴⁺(discharged)/Mn⁵⁺(charged)

For Mn clathrochelate as one side electrolyte:
Negolyte/Posolyte: Mn³⁺/Mn⁴⁺

Utilizing more than one oxidation state change in the charging or discharging process, while maintaining a stable species in the electrolyte, can significantly the provided charge density of the redox flow battery. As shown above, the clathrochelate species of the claimed redox flow battery allow for an employment in the negative half-cell, the positive half-cell, as well as the combination thereof.

The hexadentate ligand of the iron or manganese clathrochelate complex can be formed from three bidentate chelating ligands and (para)formaldehyde, wherein the ligands form a cage-like structure around the iron or manganese ion, preferably a dodeca-aza-quadricyclic cage.

In detail, the bidentate chelating ligands used to form the clathrochelate complex (or the ligand thereof) can be based on compounds comprising oxalyl dihydrazide and (para)formaldehyde. Optionally the cage-like structure around the central metal ion is a substituted or unsubstituted macrobicyclic hexahydrazide ligand. Depending on the charge of the metal center and the ligand, the clathrochelate complex is present in the electrolyte solution as an anion. That is, the charge of the metal center can vary from +2 to +5 as discussed above. Furthermore, both, Fe and Mn clathrochelate complexes, in this invention are having +4 oxidation state under air as the resting sate. All the oxidation states (Fe²⁺, Fe³⁺, Fe⁴⁺, Mn³⁺, Mn⁴⁺, Mn⁵⁺) which can be utilized in redox flow battery set up are all anion because the ligand is generally 6-. However, one or two nitrogen atoms (directly bond to a coordinating nitrogen atom) can be protonated, depending on the synthesis, conditions, charging state etc. Providing an additional charge of the ligand can further increase the solubility of the clathrochelate complex due to increased interaction with the electrolyte (e.g. with water molecules). That is, the complex can comprise (or be) a non-charged or charged complex. Whether or not the complex is charged depends on the charge of all metal atoms M and the coordinating ligand. If the charge of the metal atom and the coordinating ligand comprised by the complex compensate each other, the overall complex is non-charged and no counterions for compensation of charges are needed. If the total charge of all metal atoms M is not compensated by the coordinating ligands comprised by the complex, the positive or negative overall charge can be compensated by counterions. In addition to the organic ligands, oxygen atoms, solvents such as water or organic solvent molecules can be part of the complex.

The hexadentate ligand can be formed from oxalyldihydrazide groups, optionally the cage-like structure around the central metal ion is a substituted or unsubstituted macrobicyclic hexahydrazide ligand, preferably formed from three bidentate chelating ligands such as oxalyldihydrazide and paraformaldehyde or formaldehyde, optionally the clathrochelate complex is present in the electrolyte solution as an anion. The iron clathrochelate complex, if present, can be a {µ-1,3,4,7,8,10,12,13,16,17,19,22-do-decaazatetracyclo[8.8.4.1^{3,17}.1^{8,12}]tetracosane-5,6,14,15,20,21-hexaonato}ferrate complex, or an iron {µ-1,3,4,7,8,10,12,13,16,17,19,22-dodecaazatetracyclo[8.8.4.1^{3,17}.1^{8,12}]tetracosane-5,6,14,15,20,21-hexaonatol complex, or the manganese clathrochelate complex, if present can be a {µ-1,3,4,7,8,10,12,13,16,17,19,22-dodecaazatetracyclo[8.8.4.1^{3,17}.1^{8,12}]tetracosane-5,6,14,15,20,21-hexaonato}manganate complex, or a manganese {µ-1,3,4,7,8,10,12,13,16,17,19,22-dodecaazatetracyclo[8.8.4.1^{3,17}.1^{8,12}]tetracosane-5,6,14,15,20,21-hexaonatol complex.

The iron clathrochelate complex can have the general structure of formula (Ia): 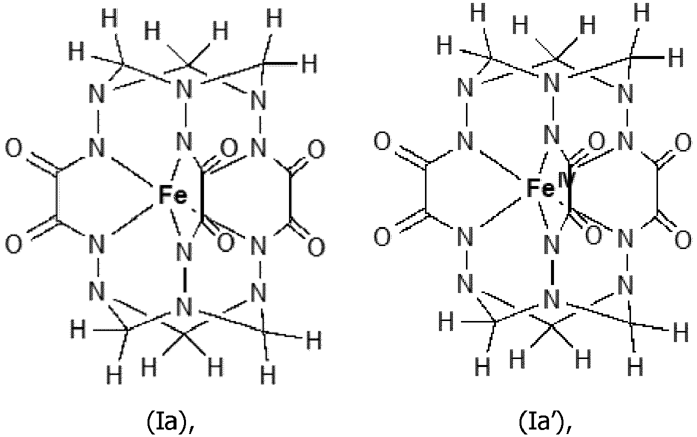 e.g. having +4 charged iron center (Fe^{IV}) as shown in (Ia'), whereas the iron center can also have +2 or +3 charge as discussed above.

As shown in the above formula (and similarly for the following general formulae (Ib) to (Id), the coordinating nitrogen atoms can be connected via two or three atoms, optionally via a substituted or unsubstituted C-C bridge and a substituted or unsubstituted N-C-N bridge. That is, the C-C bridge is between two coordinating nitrogen atoms (these are shown as having a bond to the metal center) and is preferably a - C(O)-C(O)- bridge (together with the coordinating nitrogen atoms: N-C(O)-C(O)-N), that is, two connected carbonyl groups which are connected to two coordinating nitrogen atoms. The N-C-N bridge is located between two coordinating nitrogen atoms and is preferably -N-CH₂-N- (together with the coordinating nitrogen atoms: N-N-CH₂-N-N). The -N-C-N- bridges are preferably interconnected in the clathrochelate complex and form a 6-membered cyclic moiety with single bonds, wherein nitrogen atoms and carbon atoms alternate and the nitrogen atoms are (directly) bond to the coordinating nitrogen atoms. Preferably, three -C-C- bridges are present in the clathrochelate complex. Preferably, the -C-C- bridges are (directly) bond to a coordinating nitrogen atom which is (directly) bond also to a 6-membered cyclic moiety as described above.

The manganese clathrochelate complex can have the general structure of formula (Ib): 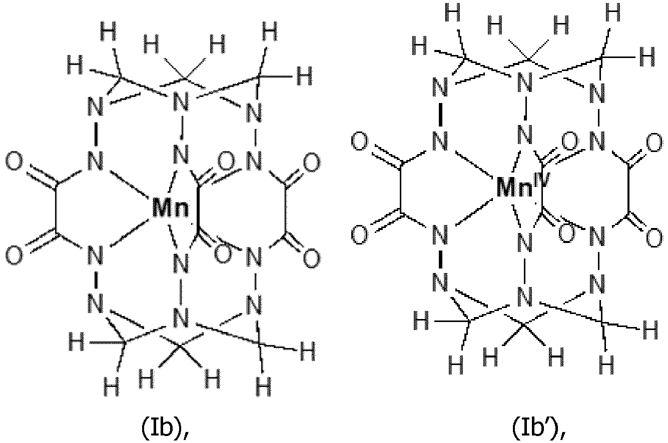 e.g. having +4 charged manganese center (Mn^{IV}) as shown in (Ib'), whereas the manganese center can also have +3 or +5 charge as discussed above.

The iron clathrochelate complex can have the general structure of formula (Ic), wherein nitrogen atoms are protonated and the complex has a total charge of 0. On the other hand, if the nitrogen atoms are not protonated (as in formulae (Ic) and (Id), the total charge of the clathrochelate complex is negative. The charge of the protonated nitrogen atoms is not explicitly shown in the shown structure. Optionally, also only one of the protonated nitrogen atoms in formula (Ic) is protonated (not shown): 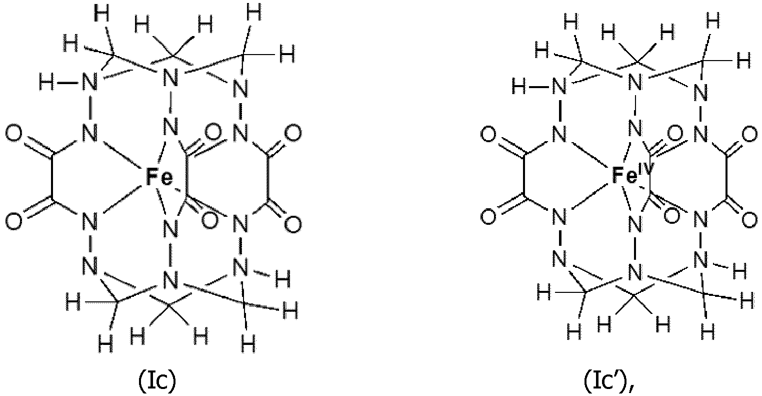 e.g. having +4 charged iron center (Fe^{IV}) as shown in (Ic'), whereas the iron center can also have +2 or +3 charge as discussed above.

The manganese clathrochelate complex can have the general structure of formula (Id), wherein nitrogen atoms are protonated and the complex has a total charge of 0. The charge of the protonated nitrogen atoms is not explicitly shown in the shown structure. Optionally, also only one of the protonated nitrogen atoms in formula (Ic) is protonated (not shown): 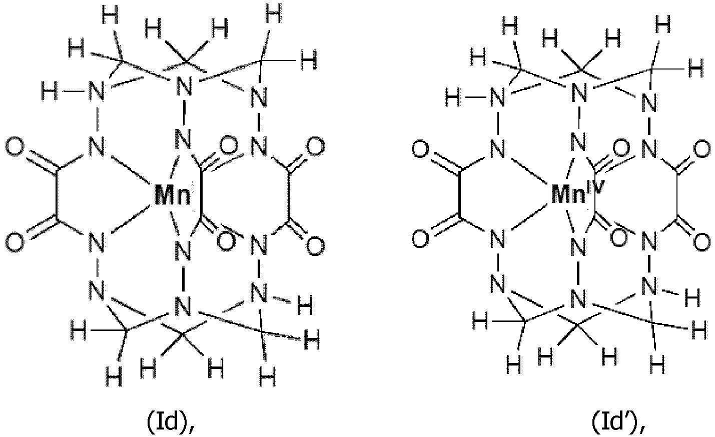 e.g. having +4 charged manganese center (Mn^{IV}) as shown in (Ib'), whereas the mangaese center can also have +3 or +5 charge as discussed above.

The electrolyte solution contained in a first storage tank can be a first electrolyte solution and the redox flow battery can further comprise: a second electrolyte solution contained in a second storage tank, the second half-cell being in fluid communication with the second storage tank. That is, the redox flow battery can essentially comprise a symmetric structure with electrolyte solutions in first and second half-cells, and respective tanks connected to the half-cells (i.e. in fluid communication with the respective half-cells).

However, the second half-cell (or the second electrode of the second half-cell) can alternatively comprise a fluid. The fluid can receive and/or provide electrons via an electrochemical reaction. The term "electrode" as used herein may generally refer to a physical object (such as a solid or fluid) capable of taking an electric current to or from a source of power. That is, the term "electrode" as used herein can refer to an electron-conducting solid but alternatively to an electron-conducting fluid. In structures in which the second electrode comprises a fluid, the first electrode can comprise the technical features as discussed above. Furthermore, while the charge transferred via the membrane arranged between the first and second half-cell/electrode can be transferred from the first electrode comprising a first flow field (and an electrolyte distributed therethrough) to a second electrolyte, the charge can also be transferred from the first electrode to a fluid such as a gas. That is, the electrons provided from the first electrode during discharging can react with a gas at the second electrode. For example, by reacting oxygen (contained in surrounding air) with electrons provided by discharging the electrolyte of the first electrode, the oxygen can be reduced and hydroxy anions are generated. By providing a redox battery unit cell, wherein the second electrode comprises a fluid (optionally comprising air and/or oxygen), the overall volume of the battery can be reduced due to the omission of, for example, the second electrolyte, while the energy density of the battery can be maintained.

In this respect, the second half-cell can comprise a redox catalyst, in particular an oxygen reduction reaction (ORR) and/or oxygen evolution reaction (OER) catalyst to compensate for the charge provided through the membrane by the first half-cell. In this embodiment, this set up is characterized in that the second half cell is having water oxidation chemistry or oxygen evolution chemistry as discussed in the following.

The redox flow battery can comprise the iron clathrochelate complex in the first electrolyte solution and the iron clathrochelate complex in the second electrolyte solution. That is, the redox flow battery can comprise similar charge carrying compounds in the electrolyte solutions of first and second half-cell. Thereby, a symmetric redox flow battery with respect to the charge carrying species can be provided. Such batteries provide systems that have highly compatible posolyte and negolyte sides with respect to the operation conditions and thus facilitate the overall infrastructure of the battery. Furthermore, such systems provide improved reliability since cross-contamination of first and second half-cell is erased due to the structurally similar charge carriers. In some embodiments, the redox flow battery further comprises the same clathrochelate complex (i.e. the same complex aside from the charge of the metal center) in the first and second electrolyte of the first and second half-cell.

In this respect, as discussed above, the oxidation states that the invention can utilize for iron clathrochelate complexes is not limited, specifically preferred oxidation states the complexes in this invention are Fe²⁺, Fe³⁺, Fe⁴⁺. In the application of a symmetric set up (that is, essentially the same or at least a similar clathrochelate complex in the electrolyte solutions of both half-cells), the tank comprising the negolyte (negolyte tank) can be using Fe²⁺/Fe³⁺, and the posolyte is using Fe³⁺/Fe⁴⁺. In the application of one-side electrolyte, either Fe²⁺/Fe³⁺ or Fe³⁺/Fe⁴⁺ can be used individually to deliver one electron and simultaneously to deliver two electrons. In such a one-side electrolyte, the iron clathrochelate complex on one side of the redox flow battery can be combined with any electrode on the second side, including a different electrolyte solution comprising a redox active species (complex), an air electrode, a solid redox active species, etc.

The concentration of the clathrochelate complex in the first and/or second electrolyte solution can be between 0.01 M and 5.0 M, preferably between 0.1 M and 2 M, further preferably between 0.5 M and 1 M or 0.5 M and 0.85 M when the clathrochelate complexes are used to store energy, i.e. as the redox active species/charge carrier in the electrolyte; as shuttle compound, the concentration of the clathrochelate complexes ranges from 0.0001 M to 0.01 M, preferably 0.001 to 0.0005 M optionally wherein the electrolyte solution comprises ammonium chloride. The specific solubility of the clathrochelate complexes depend naturally on the solvent (preferably aqueous), pH, temperature, further compounds etc. In detail, both Fe and Mn clathrochelate complexes have been shown to reach 1 M solubility at pH>7, for example with tetraethyl ammonium hydroxide. However, the supporting electrolytes are not limited to ammonium salts. Further supporting electrolytes include but are not limited to: tetraalkylammonium salts (e.g. tetraethylammonium bromide), sulfuric acid, hydrochloric acid, methanesulfonic acid, phosphoric acid, ammonium sulfate, potassium chloride, sodium chloride, lithium chloride, sodium nitrate, etc. Furthermore, both Fe and Mn clathrochelate complexes can also have low water solubility 0.1 M at pH<5 (similarly depending on the above factors). Therefore, in order to provide high concentrations of the clathrochelate complexes (thus providing high charge density), the pH has to be adjusted appropriately. For example, to reach concentration > 0.1 M , the pH should be preferably adjusted to > 7, preferably, pH >10.

Furthermore, to utilize Mn⁴⁺/Mn⁵⁺ either in the symmetric setup or one-side electrolyte setup, the pH, however can be limited to between 4 to 8, because at pH>8, water oxidation reaction can occur, depending on the solvent present and the surrounding conditions. This means that the concentration of the Mn clathrochelate complexes solution might have to be adjusted to 0.1 M or lower. In the case of Fe clathrochelate complexes, the concentration can be as high as 0.85 M or higher (e.g. 1 M or higher such as 1 M to 10 M, 1 M to 5 M, 1 M to 2.5 M), since the redox pair Fe²⁺/Fe³⁺ (which can be realized in the clathrochelate complexes depending on the charge status) prefers pH> 10 to prevent hydrogen evolution as a side reaction.

The redox flow battery can further be comprising a pump system configured to circulate the first and/or second electrolyte solutions between the first storage tank and the first half-cell, and, if present, between the second storage tank and the second half-cell.

The redox flow battery can have a 50% cycling stability (i.e. lifetime), preferably an 80% cycling stability at temperatures ranging from -10 °C to +40 °C of 500 cycles or more, preferably 1000 cycles or more, preferably of 5000 cycles or more, further preferably of 20000 cycles or more. The redox flow battery can have a 50% cycling stability, preferably an 80% cycling stability at temperatures ranging from 0 °C to +20 °C of 2000 cycles or more, preferably of 10000 cycles or more, preferably 20000 cycles or more, further preferably of 50000 cycles or more. The cycling stability of a battery is defined by the number of charging- or discharging cycles until its capacity is reduced to a certain amount of its nominal capacity (typically 50% to 80%).

The stability of the clathrochelate complexes provides the electrolyte solutions and thus the operation of the redox flow battery with remarkable stability during cycling. Furthermore, the stability of the complexes over various oxidation states furthermore reduces the likelihood of side reaction which can reduce the power output and/or result in detrimental reactions in the electrolyte or battery system. Furthermore, the stability of the clathrochelate complexes allows for an operation in open system thus allowing to simplify the redox flow battery since, e.g. no pressure peaks are created in the system.

In a further aspect according to the present disclosure, there is provided an electrolyte solution for use in redox flow batteries, the solution comprising an iron clathrochelate complex or a manganese clathrochelate complex at a concentration of from 0.01 M and 5.0 M. As discussed above, the stability and versatility of the clathrochelate complexes allows for providing highly concentrated electrolyte solutions with superior charge density as compared to established systems.

With respect to the recyclability and sustainability of such electrolyte solutions: In general, in redox-flow batteries, the electrolyte solution contains not only the redox-active species which stores electrochemical potential of the electrons (such as clathrochelate complexes), but also the pH-tuning agents and supporting electrolytes for better conductivity. Once the electrolyte solution is prepared, it is difficult to isolate and purify the redox-active electrolytes (posolyte and negolyte) for future usage.

The Fe and Mn clathrochelate complexes in this invention possess unprecedented stability in a wide range of pH (0.1-14). In acidic condition (pH < 4), the two (NNC2) amide positions would be protonated and form a neutral complex which would precipitate out due to the lower solubility in water. Such property provides a convenient method for purification and recycling. The Fe and Mn clathrochelate complexes in this invention can thus be isolated and recrystallized from the electrolyte solution containing other supporting electrolytes or basic tuning agents by acidifying the solution to pH around 0.1 with the recycling yield > 90%. This makes the Fe and Mn clathrochelate complexes fully recyclable, thus, the redox-flow battery is sustainable. Preferred pH environment for the functioning of the redox flow battery according to the present invention include thus from pH 2 to 7, preferably 2.5 to 5, further preferably 3 to 4 when using Mn clathrochelate complexes; or from pH 5 to 11, preferably 7 to 10, further preferably 8.5 to 10 when using Fe clathrochelate complexes. The pH range for symmetric redox flow battery setup for Mn is 3 to 8. The pH range for symmetric redox flow battery setup for Fe is 7-14.

In a further aspect according to the present disclosure, there is thus provided a method of recycling the redox active species (such as clathrochelate complexes) from an electrolyte solution, preferably of a redox flow battery, the method comprising: adjusting the pH value of the electrolyte solution such that the redox active species precipitates, and removing the precipitate from the electrolyte solution. Adjusting the pH value can comprise acidifying the electrolyte solution, such as to a pH of 7 and below, of 5 and below, of 3 and below, or of 1 and below. Adjusting the pH value can comprise acidifying the electrolyte solution by addition of an organic or inorganic acid, such as hydrochloric acid (solutions), sulfuric acid (solutions), phosphoric acid (solutions), acetic acid (solutions), etc. Removing the precipitated species is not particularly limited and can comprise sieving, decanting and washing, etc.

In a further aspect according to the present disclosure, there is provided a method of operating a redox flow battery as defined in the claims, the method comprising: charging said redox flow battery by electrically reducing the iron cations fully or partially to Fe²⁺. The method can also comprise electrically reducing the manganese cations fully or partially to Mn³⁺. The method can also comprise charging said redox flow battery by providing said electrolyte solution comprising said iron clathrochelate complex or said manganese clathrochelate complex in a charged state, wherein the iron clathrochelate complex, if present, comprises Fe²⁺ cations or wherein the manganese clathrochelate complex, if present, comprises Mn³⁺ cations.

That is, the method of operating a redox flow battery according to the present invention as defined in the claims is not limited to electrically recharging the battery, i.e. applying charge such that the redox reactions during the discharging are reversed, but the redox flow battery can also be recharged by introducing pre-charged electrolyte in the respective half-cell of the battery. For examples, clathrochelate complexes comprising essentially only Fe²⁺ can be introduced into the respective half-cell in order to recharge the battery. For example, in the negolyte: Fe²⁺(charged) can be introduced in order to provide a charged state since (i.e. Fe³⁺ corresponds to a discharged state). On the other hand, in the posolyte: Fe⁴⁺ can be introduced in order to provide a charge.

In detail, the method can be further comprising: discharging the redox flow battery by oxidization of the Fe²⁺ cations in one of the half-cells partially or fully to Fe³⁺ and/or Fe⁴⁺ cations, if present, or by oxidation of the Mn³⁺ in one of the half-cells to Mn⁴⁺ and/or Mn⁵⁺ cations, if present.

A further aspect refers to the use of a redox flow battery as defined in the claims for storing or providing electrical energy in a stationary, portable or mobile device or application.

A further aspect relates to the use of an iron clathrochelate complex or a manganese clathrochelate complex, preferably as defined in any of the preceding claims, as shuttle compound in batteries, optionally organic solid flow or redox flow batteries. Specifically, as discussed above, since the clathrochelate complexes have surprisingly stable redox events, they are therefore great candidates as shuttle compounds to prevent overcharging in conventional redox flow batteries and batteries in general.

### Figure description

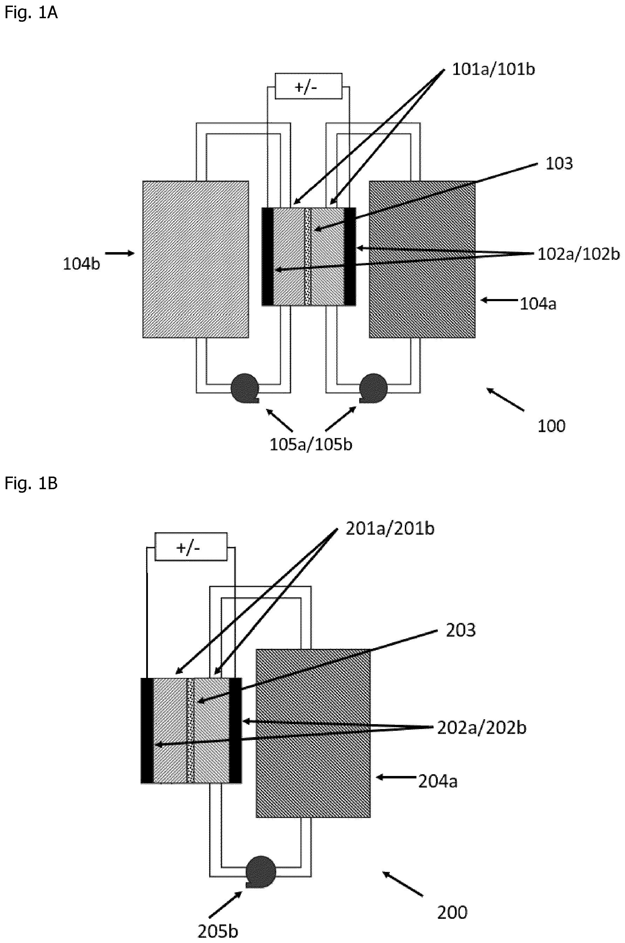

Figure 1A shows a demonstrative figure of a redox flow battery (100) comprising two half-cells (101a, 101b), respective two electrodes or current collectors (102a, 102b) and a membrane (103) arranged between the first electrode (102a) and the second electrode (102b). In the exemplary redox flow battery (100), a first one (101a) of the two half-cells (101a, 101b) is coupled or in fluid communication with a first storage tank (104a) such as a negolyte tank and a second one (101b) of the two half-cells (101a, 101b) is coupled to a second storage tank (104b) such as a posolyte tank. A first pump (105a) and a second pump (105b) are configured to provide the electrolyte solutions (such as negolyte and posolyte) to the half-cells coupled thereto.

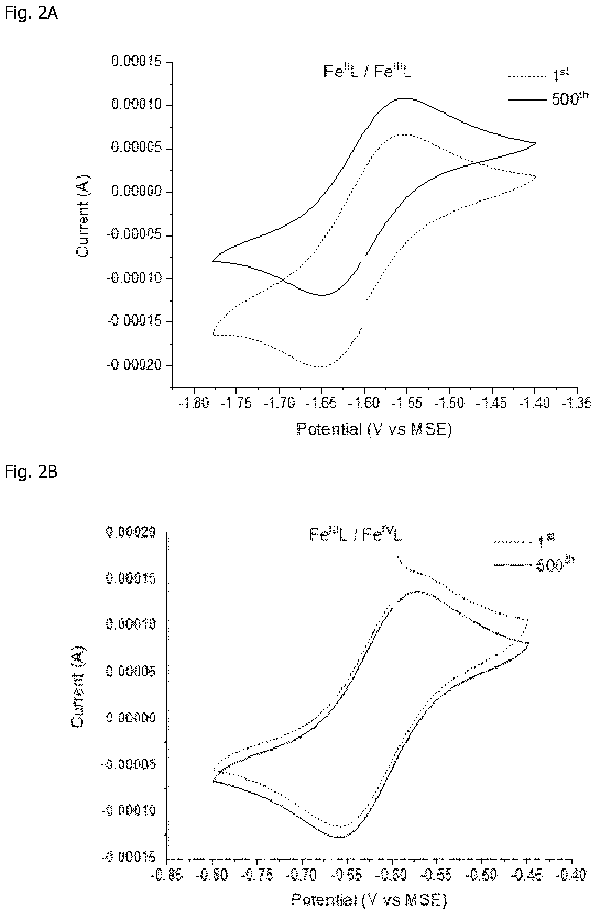

Figure 1B shows a demonstrative figure of a redox flow battery (200) comprising two half-cells (201a, 201b), wherein the second half-cell (201b) is an air-electrode. That is, while the part of the redox flow battery than can be coupled to an electrolyte negolyte tank (204a) is identical to the redox battery unit cell (100) shown in Figure 1A (comprising a pump (205b) and a membrane (203)), the second half-cell is an air electrode (202b) comprising a fluid in contact with the second solid electrode (which is a part of the second half-cell (201b) and thus not shown as a separate feature in Figure 2). That is, the charge transferred from the first electrode side via ions to the second half-cell (201b) and thus the second electrode/current collector (202b) can be further transferred through an electrochemical reaction, such as with oxygen:

   ½ O₂ + 2H⁺ + 2e⁻ ↔ H₂O.
Figure 2A shows the cyclic voltammogram of Fe^{II}L/Fe^{III}L redox pair (8.5 mM) in 1 M NH₄Cl solution at pH 9.2. 1^{st} scan (dashed line) and 500^{th} scan (solid line), wherein L represents the ligand of a clathrochelate complex as defined in the claims. Figure 2B shows the cyclic voltammogram of Fe^{III}L/Fe^{IV}L redox pair (8.5 mM) in 1 M NH₄Cl solution at pH 9.2. 1^{st} scan (dashed line) and 500^{th} scan (solid line). The cyclic voltamo-gram shows the measured current vs. the applied potential with respect to a mercury-mercurous electrode (MSE). The figures show a highly stable redox reaction during oxidation and reduction of the iron center of the clathrochelate complex.

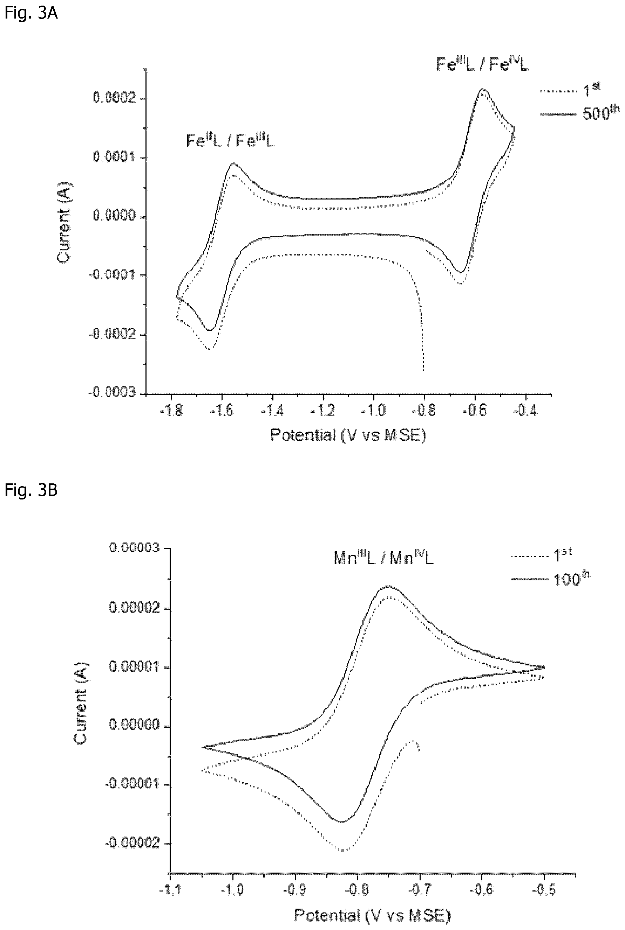

Figure 3A shows the cyclic voltammogram of Fe^{II}L/Fe^{III}L and Fe^{III}L/Fe^{IV}L redox pairs (8.5 mM) in 1 M NH₄Cl solution at pH 9.2. 1^{st} scan (dashed line) and 500^{th} scan (solid line). Figure 3B shows the cyclic voltammogram of Mn^{III}L/Mn^{IV}L redox pair (8.5 mM) in 1 M NH₄Cl solution at pH 3.8. 1^{st} scan (dashed line) and 100^{th} scan (solid line). The figures show a highly stable redox reaction during oxidation and reduction of the iron and manganese center of the clathrochelate complex.

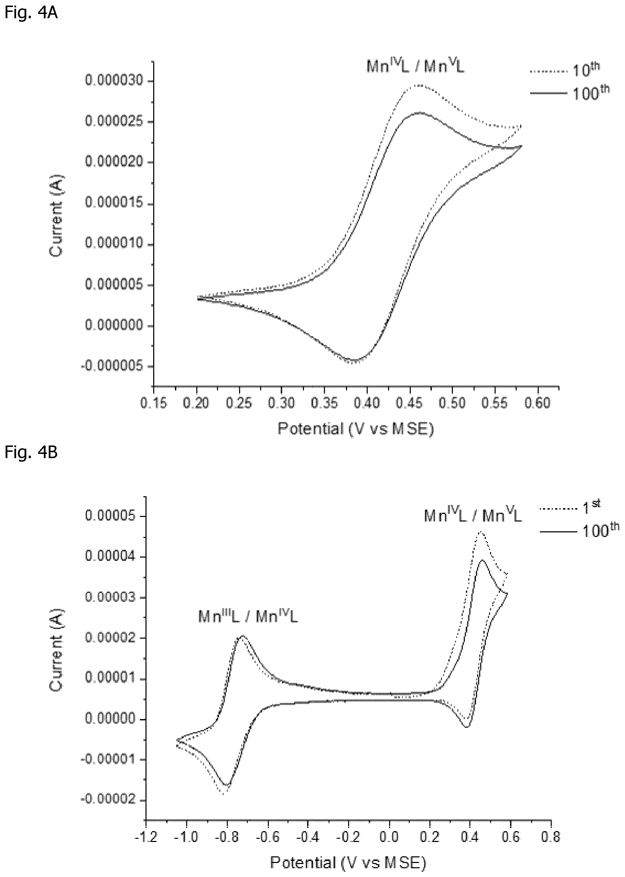

Figure 4A shows the cyclic voltammogram of Mn^{IV}L/Mn^{V}L redox pair (8.5 mM) in 1 M NH₄Cl solution at pH 3.8. 1^{st} scan (dashed line) and 100^{th} scan (solid line). Figure 4B shows the cyclic voltammogram of Mn^{III}L/Mn^{IV}L and Mn^{IV}L/Mn^{V}L redox pairs (8.5 mM) in 1 M NH₄Cl solution at pH 3.8. 1^{st} scan (dashed line) and 100^{th} scan (solid line). The figures show a highly stable redox reaction during oxidation and reduction of the manganese center of the clathrochelate complex.

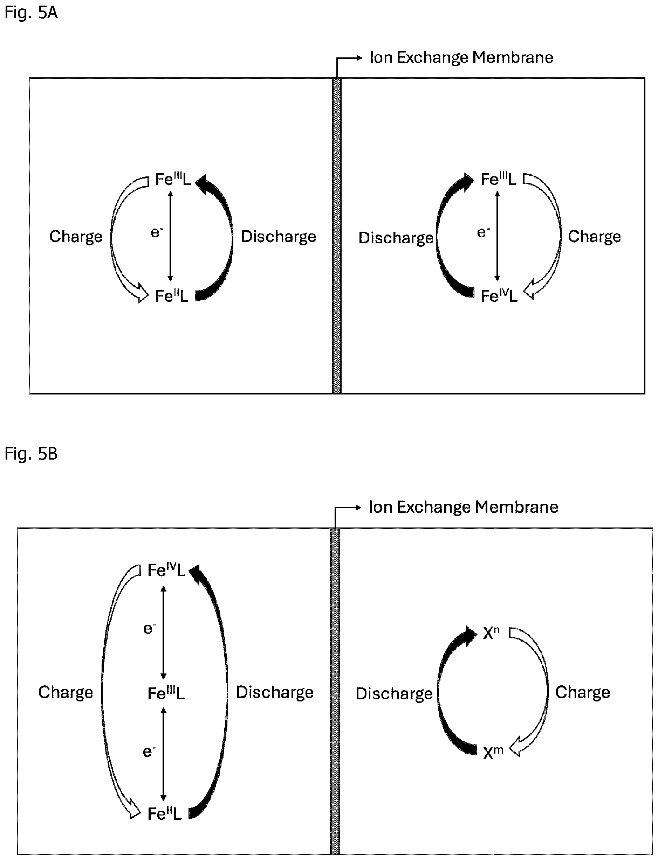

Figure 5A shows a demonstrative figure of a symmetric electrolyte system using clathrochelate Fe complexes (FeL). Figure 5B shows a demonstrative figure of using clathrochelate Fe complexes (FeL) as one-side electrolyte. As shown in Figure 5B, the FeL can be combined with any other suitable redox active species Xⁿ, including also for example oxygen which can be reduced during the discharging.

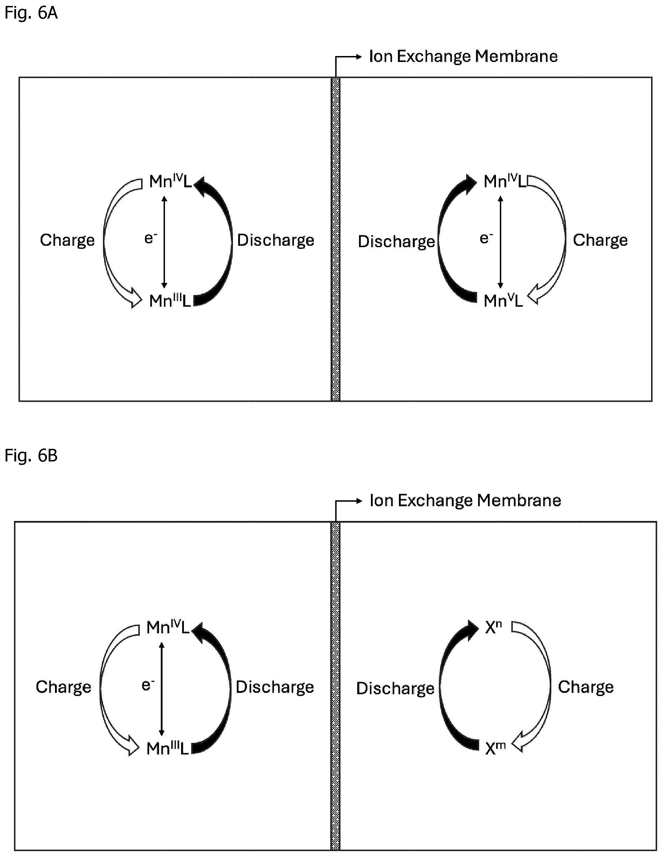

Figure 6A shows a demonstrative figure of a symmetric system using clathrochelate Mn complexes (MnL). Figure 6B shows a demonstrative figure of using clathrochelate Mn complexes (MnL) as one-side electrolyte.

### Examples

### Example 1: General synthetic procedure

General remarks: all the chemicals were obtained from commercial sources and used without any further purification. Elemental analysis was performed in the CRC Analytic Core Facility of the Technical University of Munich. UV-Vis measurements were carried out using an Agilent Cary 60 UV-Vis spectrophotometer. Cyclic voltammetry was recorded on a Metrohm Autolab potentiostat/galvanostat. pH values were determined with a Mettler Toledo pH meter.

Synthesis of H₂[Fe^{IV}(L)]•4H₂O /H₂[Mn^{IV}(L)]•xH₂O: oxalyl dihydrazide (90 mmol) was added into 1.5 L of deionized water with rigorous stirring. The solution was heated up to 55 °C until the suspension was fully dissolved. The solution was then cooled down to 36 °C and the metal salt FeCl₃ or FeCl₃•6H₂O or Fe(NO₃)₃•6H₂O / MnCl₂•4H₂O or Mn(ClO₄)₂•xH₂O (30 mmol) was added into the solution immediately. After the metal salt was fully dissolved, paraformaldehyde (powder, 180 mmol) and sodium hydroxide (pellets, 150 mmol) were added together into the solution with rigorous stirring. During the reaction course, the solution slowly turned into dark green color. The solution was left to be reacted fully for 24 hours. The solution was filtered, and the filtrate was kept. Concentrated HCl (37% wt.%) was then added slowly to the filtrate solution with rigorous stirring until pH = 0.1. The solution was left to be stirred for 2 hours and a dark green crystalline formed. The suspension was vacuum filtered, and the glittery material was washed with acetone to remove excessive HCl. (Yield: 50-60%).

### Example 2: Electrochemical properties

In redox-flow battery, the electrons are stored in redox-active electrolytes and difference of the redox potential of the two electrolytes with be the voltage of a single cell. The reversibility and stability of the redox-active electrolytes are crucial factors for the performance of the battery. Unlike metal-ion electrolytes which requires highly acidic environment to maintain stability and suffers from membrane-crossing, metal-ligand complexes are proved to increase stability and reduce the membrane-crossing. Several metal complexes were reported for electrolyte use in redox-flow battery, however, the metal-complexes for a symmetric system (electrolyte serving both anolyte and catholyte) have not yet been discovered.

The cyclic voltammetry of the clathrochelate iron complex (general formula Ia above; in the following FeL) in this present invention was tested. Other than the literature reported Fe^{III}/Fe^{IV} redox event (E_{1/2} = -0.6 V vs MSE), a new stable redox event attributed to Fe^{II}/Fe^{III} redox pair (E_{1/2} = -1.6 V vs MSE) was discovered at pH>9 solution. Both redox events show high reversibility with low peak-to-peak separation (< 0.1 V) and high stability through continuous scans. Such electrochemical behavior enables FeL to be an electrolyte shuttling two electrons or an electrolyte serving both anolyte and catholyte building the first all-iron all-liquid symmetric Redox-flow battery system.

The cyclic voltammetry of the clathrochelate Mn complex (MnL) in this present invention was tested. It demonstrates two highly reversible and stable redox events (Mn^{III}/Mn^{IV}, E_{1/2} = -0.82 V vs MSE and Mn^{IV}/Mn^{V}, E_{1/2} = 0.42 V vs MSE) at pH range between 4 to 8. Thus, MnL can be utilized for the first all-Mn all-fluid symmetric system for redox-flow battery. Additionally, MnL can also be used as electrolyte and paired with the other known electrolyte material.

### Example 3: Solubility

The clathrochelate Fe/Mn complexes presented in this invention are water-soluble. With metal salts as cation (Li+, Na+, K+,...), the concentration can reach at least 0.2 M under alkaline conditions. In this present invention, a method to improve the concentration is disclosed. The concentration can further reach at least 0.85 M (e.g. 1.0 M) concentration by replacing the typical alkaline metal ion with ammonium salts (ammonium, tetramethylammonium, tetralethylammonium, and other derivatives) as counterion and with the solution pH range from 8 to 13.

## Claims

1. A redox flow battery, comprising:
an electrolyte solution contained in a first storage tank,
a first half-cell in fluid communication with the first storage tank,
a membrane separating the first half-cell and a second half-cell,
wherein the electrolyte solution comprises an iron clathrochelate complex or a manganese clathrochelate complex.

2. The redox flow battery according to claim 1, wherein
the iron or manganese clathrochelate complex comprises an iron or manganese ion as the center of the clathrochelate complex and six nitrogen atoms of a hexadentate ligand coordinating to the iron or manganese ion, wherein the coordinating nitrogen atoms are preferably connected via two or three atoms, optionally via a substituted or unsubstituted C-C bridge and/or a substituted or unsubstituted N-C-N bridge.

3. The redox flow battery according to claim 1 or 2,
wherein
the iron is partially or fully present as Fe²⁺, Fe³⁺ or Fe⁴⁺, preferably the iron is partially or fully present as Fe²⁺ or Fe³⁺, and/or
the manganese is partially or fully present as Mn³⁺ Mn⁴⁺ or Mn⁵⁺, preferably the manganese is partially or fully present as Mn³⁺ or Mn⁴⁺, and/or
the iron is not present in an oxidation state other than Fe²⁺, Fe³⁺ or Fe⁴⁺, preferably the iron is not present in an oxidation state other than Fe²⁺ or Fe³⁺, and/or
the manganese is not present in an oxidation state other than Mn³⁺, Mn⁴⁺ or Mn⁵⁺, preferably the manganese is not present in an oxidation state other than Mn³⁺ or Mn⁴⁺.

4. The redox flow battery according to any one of claims 1 to 3, wherein
the hexadentate ligand of the iron or manganese clathrochelate complex is formed from three bidentate chelating ligands and formaldehyde, wherein the ligands form a cage-like structure around the iron or manganese ion, preferably a dodeca-aza-quadricyclic cage.

5. The redox flow battery according to claim 4, wherein said hexadentate ligand is formed from oxalyldihydrazide groups, optionally the cage-like structure around the central metal ion is a substituted or unsubstituted macrobicyclic hexahydrazide ligand, optionally the clathrochelate complex is present in the electrolyte solution as an anion.

6. The redox flow battery according to any preceding claim, wherein
the iron clathrochelate complex, if present, has a general structure of following formula (Ia), or wherein
the manganese clathrochelate complex, if present, has a general structure of following formula (Ib), or wherein
the iron clathrochelate complex, if present, has a general structure of following formula (Ic), or wherein
the manganese clathrochelate complex, if present, has a general structure of following formula (Id):

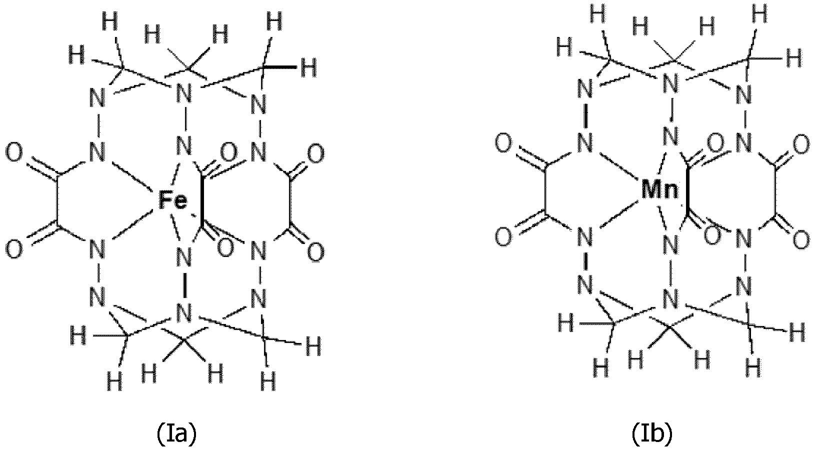

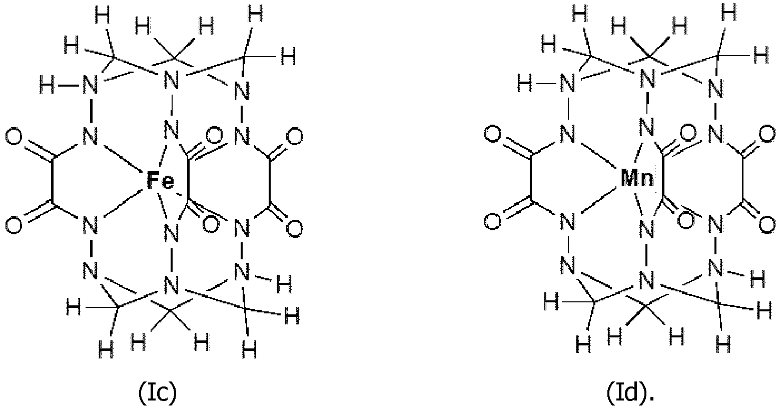

7. The redox flow battery according to any preceding claim, wherein the electrolyte solution contained in a first storage tank is a first electrolyte solution and the redox flow battery further comprises:
a second electrolyte solution contained in a second storage tank,
the second half-cell being in fluid communication with the second storage tank.

8. The redox flow battery according to any preceding claim, wherein
the redox flow battery comprises the iron clathrochelate complex in the first electrolyte solution and the iron clathrochelate complex in the second electrolyte solution, or
the redox flow battery comprises the manganese clathrochelate complex in the first electrolyte solution and the manganese clathrochelate complex in the second electrolyte solution.

9. The redox flow battery according to any preceding claim, wherein the concentration of the clathrochelate complex in the first and/or second electrolyte solution is between 0.01 M and 5.0 M, preferably between 0.1 M and 2 M, further preferably between 0.5 M and 1 M, most preferably between 0.5 M and 0.85 M, optionally wherein the electrolyte solution comprises ammonium chloride.

10. The redox flow battery according to any preceding claim, wherein
the redox flow battery has a 50% cycling stability, preferably an 80% cycling stability at temperatures ranging from -10 °C to +40 °C of 500 cycles or more, preferably 1000 cycles or more, preferably of 5000 cycles or more, further preferably of 20000 cycles or more; and/or wherein
the redox flow battery has a 50% cycling stability, preferably an 80% cycling stability at temperatures ranging from 0 °C to +20 °C of 2000 cycles or more, preferably of 10000 cycles or more, preferably 20000 cycles or more, further preferably of 50000 cycles or more.

11. Electrolyte solution for use in redox flow batteries, the solution comprising an iron clathrochelate complex or a manganese clathrochelate complex at a concentration of from 0.01 M to 5.0 M, preferably from 0.01 M to 2.0 M, further preferably of from 0.01 M to 1.5 M.

12. A method of operating a redox flow battery as defined in any one of claims 1 to 10, the method comprising:
charging said redox flow battery by electrically reducing the iron cations fully or partially to Fe²⁺ or Fe³⁺ by electrically reducing the manganese cations fully or partially to Mn³⁺; or
charging said redox flow battery by providing said electrolyte solution comprising said iron clathrochelate complex or said manganese clathrochelate complex in a charged state, wherein the iron clathrochelate complex, if present, comprises Fe²⁺ or Fe³⁺ cations or wherein the manganese clathrochelate complex, if present, comprises Mn³⁺ cations, optionally,
the method further comprising:
discharging the redox flow battery by oxidization of the Fe²⁺ cations in one of the half-cells partially or fully to Fe³⁺ and/or Fe⁴⁺ cations, if present, or by oxidation of the Mn³⁺ in one of the half-cells to Mn⁴⁺ and/or Mn⁵⁺ cations, if present.

13. A method of recycling a clathrochelate complex from an electrolyte solution, preferably of a redox flow battery, the method comprising:
adjusting the pH value of the electrolyte solution such that the clathrochelate complex precipitates, and
removing the precipitate from the electrolyte solution.

14. Use of a redox flow battery according to any one of claims 1 to 10 in a method of storing or providing electrical energy in a stationary, portable or mobile device or application.

15. Use of an iron clathrochelate complex or a manganese clathrochelate complex, preferably as defined in any of the preceding claims, as shuttle compound in batteries, optionally organic solid flow or redox flow batteries.
